# EUROPEAN PATENT APPLICATION

(11) **EP 4 804 431 A1**
(43) Date of publication of application: **09.09.2026**
(21) Application number: 25162392.2
(22) Date of filing: 07.03.2025
(51) Int. Cl.: H04B 17/10, H04W 52/14, H04W 52/36

(54) **OPTIMISING MAXIMUM POWER REDUCTION IN A WIRELESS COMMUNICATION NETWORK**

(71) Applicant: Vodafone Group Services Limited, Newbury, Berkshire RG14 2FN (GB)
(72) Inventor: BOUKLEY HASAN, Wael, London, W2 6BY (GB)
(74) Representative: Boult Wade Tennant LLP

(57) **Abstract**

There is described herein a method of operating user equipment in a telecommunications network in which the user equipment operates in accordance with a reference maximum power and an assigned maximum power reduction to limit the transmit power to a reduced power limit less than the maximum power. The method comprises obtaining the over-the-air total radiated power of the user equipment when operating to meet the reference maximum power; determining a shortfall corresponding to how much the over-the-air total radiated power is less than the reference maximum power; and setting a new maximum power reduction by decreasing the assigned maximum power reduction by an amount less than or equal to the shortfall.

## Description

### FIELD OF INVENTION

The disclosure relates generally to wireless communications in a network and more specifically, methods for optimising maximum power reduction in a wireless communication network.

### BACKGROUND OF THE INVENTION

In modern wireless communication systems, uplink performance plays a crucial role in ensuring seamless connectivity, particularly in challenging network environments. The transmit power of User Equipment (UE) must be controlled in order to meet regulatory requirements. For example, a reference maximum uplink power may be mandated, and this may vary for different power classes. For example, 3GPP specifications requires a maximum uplink power of 23 dBm for power class 3 for LTE/NR bands. However, it may be desirable to limit power below this maximum, for example to ensure spectral purity.

One mechanism to limit the uplink power of the user equipment is to apply a Maximum Power Reduction (MPR) to the power of the signal provided by the power amplifier of the UE. For instance, it may be assumed that the UE will transmit at the 23 dBm maximum, but a maximum power reduction of 3 dBm may be applied to produce a reduced uplink power limit of 20 dBm thereby ensuring requirements governing spectral emissions such as adjacent channel leakage are met.

The maximum power reduction is defined in 3GPP standards, and maximum power reduction values are typically predefined and fixed irrespective of the particular UE, which does not account for device-specific variations in radiated power efficiency. This leads to suboptimal uplink coverage and performance, particularly for devices with high transmission efficiency. Also, setting over-restrictive maximum power reduction values unnecessarily reduces uplink coverage, particularly for cell-edge users, limiting overall network capacity and performance.

### SUMMARY

From a first aspect, the present invention resides in a method of operating user equipment in a telecommunications network in which the user equipment operates in accordance with a reference maximum power and in accordance with an assigned maximum power reduction to limit the transmit power to a reduced power limit less than the maximum power. The method comprises (i) obtaining the over-the-air total radiated power of the user equipment when operating to meet the reference maximum power; (ii) determining a shortfall corresponding to how much the over-the-air total radiated power is less than the reference maximum power; and (iii) setting a new maximum power reduction by decreasing the assigned maximum power reduction by an amount less than or equal to the shortfall.

This method provides an adjustment of the maximum power reduction that is tailored to a particular UE as based on determining the over-the-air total radiated power of the UE. The method may further comprise operating the user equipment to communicate with the telecommunications network according to the revised maximum power reduction. This allows for per-device optimization and enhanced uplink signal strength, this addressing the problems described above.

The assigned maximum power reduction will generally have a positive value, while the new maximum power reduction may have a value between zero and the assigned maximum power reduction. For example, if step (ii) indicates that there is no difference between the over-the-air total radiated power and the reference maximum power, no adjustment of the maximum power reduction is made (as, effectively, the difference is zero so subtracting this from the maximum power reduction does not change the maximum power reduction). Hence, the full assigned maximum power reduction is applied to ensure that the user equipment transmits at the reduced power level. Alternatively, if step (ii) produces a shortfall that is equal to or greater than the assigned maximum power reduction, then step (iii) will result in a new maximum power reduction of zero. This is because the shortfall indicates that the user equipment operating at full power provides less power than the reduced power limit, and so no maximum power reduction is required. Where step (ii) indicates a shortall between zero and the assigned maximum power reduction, the shortfall may be subtracted from the assigned maximum power reduction which will result in the user equipment transmitting at the reduced power limit.

Step (i) may comprise testing the user equipment, or another user equipment of the same type, by operating the user equipment and measuring the over-the-air total radiated power. The testing may be performed prior to sale of the user equipment, for example in a laboratory or other testing facility. The measured over-the-air total radiated power may be stored in a computer memory of the user equipment or the base station. Hence, step (i) may simply require retrieving a stored value of the over-the-air total radiated power.

Optionally, step (i) may comprise obtaining the over-the-air total radiated power by measuring a power parameter during normal use of the user equipment. Step (i) may comprise measuring the over-the-air total radiated power directly, for example using a power sensor of the user equipment.

Step (i) may comprise calculating the total radiated power from the measured power parameter. Measuring the power parameter may comprise measuring impedance matching of an antenna of the user equipment and the method comprises converting the impedance matching to an equivalent over-the-air total radiated power. The impedance matching may be converted to an equivalent over-the-air total radiated power using a stored relationship or look-up table that relates values. Measuring the impedance matching of the antenna may comprise measuring a standing wave ratio.

The user equipment may perform step (ii) and the method may further comprise the user equipment transmitting a notification to the telecommunications network to report the total radiated power. The telecommunications network may perform step (iii) and the method may further comprise the telecommunications network transmitting a notification to the user equipment to report the new maximum power reduction. The user equipment may perform steps (i) to (iii) and the method may further comprise the user equipment transmitting a notification to the telecommunications network to report the new maximum power reduction.

The method may comprise repeatedly performing steps (i) to (iii). For example, when a new value for the over-the-air total radiated power becomes available and/or a new assigned maximum power reduction is released, steps (ii) and (iii) may be repeated to provide a new maximum power reduction for the user equipment.

The present invention also extends to one or more computer programs comprising instructions that, when executed by one or more computer processors, cause the one or more computer processors to implement any of the methods described above, and to one or more computer-readable media comprising the one or more computer programs. A single computer program may be used, or two or more computer programs may be used that work together via separate devices, for example a computer program running on user equipment and a computer program running on a base station or other piece of network infrastructure.

The method according to the first aspect of the present invention may be implemented by the user equipment alone, and so the present invention also extends to user equipment configured to operate in a telecommunications network, the user equipment comprising one or more computer processors and computer memory having stored therein a computer program comprising instructions that, when executed by the one or more computer processors, cause the one or more computer processors to implement any of the methods described above. The method according to the first aspect of the present invention may be implemented by the user equipment in combination with a base station, and so the present invention also extends to a telecommunications network comprising a base station and user equipment connected to the base station, wherein the telecommunications network comprises one or more computer processors and one or more computer memories having stored therein one or more computer programs comprising instructions that, when executed by one or more computer processors, cause the one or more computer processors to implement any of the methods described above. For example, the computer memories may be provided by the user equipment and the base station, and the computer processors may also be provided by the user equipment and the base station.

### LIST OF FIGURES

In order that the invention can be more readily understood, reference will now be made by way of example only, to the accompanying drawings in which:
Figure 1 is a schematic representation of a method of revising maximum power reduction based on an over-the-air total radiated power; and
Figure 2 shows a schematic message flow for monitoring total radiated power on the UE side.

### DETAILED DESCRIPTION

When transmitting messages, the user equipment (UE) operates to ensure that the power of the transmitted signal (referred to herein as the actual uplink power) is below the regulated maximum uplink power (e.g. 23 dBm). Whether or not a particular UE can achieve the maximum uplink power depends on the design of that UE, for example the antenna design and efficiency of the power amplifier among other things. The actual uplink power achieved by the UE can be characterised in different ways, such as the over-the-air total radiated power. The over-the-air total radiated power may be defined as the total power radiated by a UE antenna in all directions, considering all angular radiation patterns.

In addition, the actual uplink power is generally limited further to a reduced uplink power limit by applying a maximum power reduction (MPR) to the UE. The maximum power reduction is applied to ensure that the UE transmissions maintain error vector magnitude (EVM) and spectral purity within permissible limits so as to minimise interference with adjacent bands. For example, a regional regulatory may mandate strike requirements which will be translated to a maximum power reduction of 3dBm to ensure that no UEs transmit at more than a reduced uplink power limit of 20 dBm. This means perfectly efficient UEs that can achieve an over-the-air total radiated power of 23 dBm will operate at the 20 dBm reduced uplink power limit: however, less-efficient UEs may only be able to achieve an over-the-air total radiated power of 21 dBm and so the further 3 dBm maximum power reduction sees those UEs operate with an actual uplink power of 18 dBm power.

Hence, applying the same static maximum power reduction value introduces inefficiencies, particularly in heterogeneous device ecosystems where different UEs exhibit varying levels of over-the-air total radiated power due to antenna design, impedance mismatches, and body effects. This results in several disadvantages. Some UEs could radiate higher power while remaining within safe limits and so such UEs are unnecessarily restricted, leading to weaker uplink signals and reduced uplink coverage. Weaker uplink signals resulting from UEs operating with excessive maximum power reduction means that the network needs to allocate additional resources to maintain link reliability. This, in turn, increases scheduling overhead and power consumption within the network.

The above means that for a typical UE, the actual uplink power realised is typically significantly less than the reduced uplink power limit. For example, the actual uplink power achieved is often around 3 dBm or so below the reduced uplink power limit. This shortfall can be leveraged to reduce the maximum power reduction being applied in individual UEs or within types of UEs to allow transmissions closer to the reduced uplink power limit. Knowledge of the shortfall between UE's over-the-air total radiated power when operating at maximum power and the reference maximum uplink power can be used to reduce the maximum power reduction being applied in normal operation. Hence, a UE's over-the-air total radiated power can be used as a reference to optimize its maximum power reduction setting, ensuring that the UE transmits as closely as possible to the reduced uplink power limit.

Embodiments of the present invention as described herein use modified maximum power reduction values in UEs, where the modification is based on a measurement or estimation of the over-the-air radiated power of that UE, such as the over-the-air total radiated power or a maximum or minimum over-the-air radiated power. Hence, instead of applying a fixed maximum power reduction across all UEs, for each UE the difference between the over-the-air radiated power and the 3GPP uplink power limit is determined and this difference (or part of the difference) is used to adjust the maximum power reduction of that UE. This allows each UE to transmit at a power level that maximizes uplink coverage while maintaining compliance.

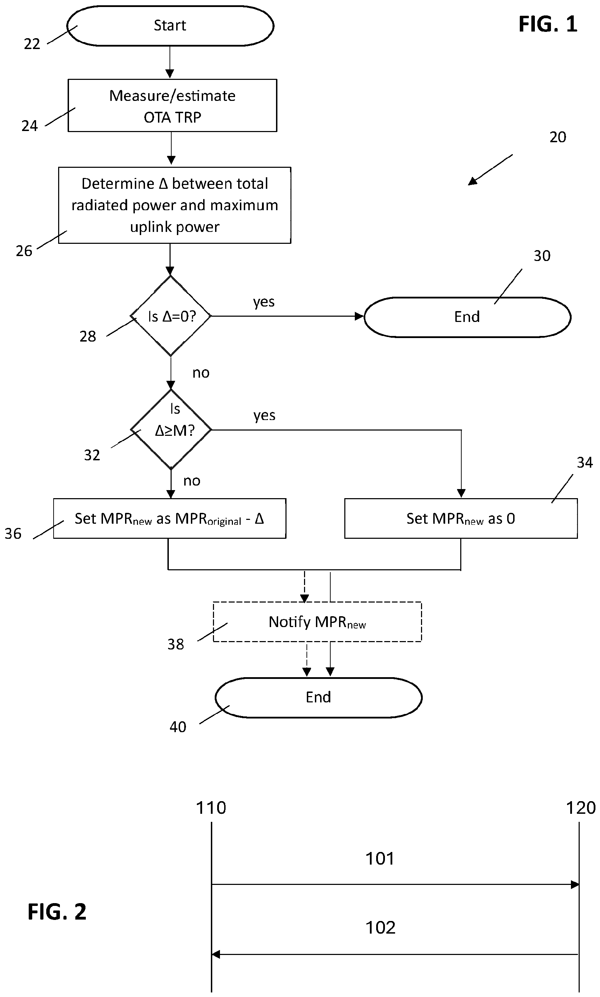

Figure 1 shows a method 20 of adjusting the maximum power reduction of a UE based on the over-the-air radiated power of the UE. In this embodiment, the over-the-air total radiated power is used, although another measure of the over-the-air radiated power may be used instead.

The method starts at 22 and, at step 24, the over-the-air total radiated power is measured or estimated. As will be described in more detail below, this step may be performed by the UE or by a base station to which the UE is connected. In addition, the over-the-air total radiated power may be measured off-line, for example as part of testing or commissioning a UE device or type of device in a laboratory or similar test facility. Alternatively, the over-the-air total radiated power may be measured or estimated directly in real time by the UE device or the base station.

At step 26, the difference (Δ) between the over-the-air total radiated power and the maximum uplink power is determined. For example, the maximum uplink power may be the reference maximum uplink power mandated by 3GPP specifications such as power class 3 = 23 dBm for LTE/NR bands.

At step 28, a determination is made as to whether the difference Δ = 0, i.e. is the UE operating at the maximum uplink power? If yes, then the full power reduction is required. Consequently, the method 20 merely ends at 30 as no revision of the maximum power reduction is required.

If it is determined that the difference Δ ≠ 0 at step 28, the method proceeds to step 32. At step 32, the difference Δ is compared to the maximum power reduction value. If the difference Δ is determined to be greater than or equal to the maximum power reduction, the method 20 continues to step 34 where the new maximum power reduction MRP_{new} is set to zero. This is because the underperformance of the UE means that it is already operating below the reduced uplink power limit. Hence, no further power reduction is required and so the maximum power reduction may be set to zero. If, on the other hand, the difference Δ is determined at step 32 to be less than the maximum power reduction, the method 20 continues to step 36 where a new maximum power reduction MRP_{new} is set. As there is some power loss in the UE as reflected by the over-the-air total radiated power being less than the maximum uplink power, not all the maximum power reduction need be applied. The offset in power (Δ) is deducted from the original maximum power reduction, i.e. the new MPR_{new} is set as MPR_{new} = MPR_{original} - Δ.

When the maximum power reduction is revised, either at step 34 or 36, the method 20 may then end at step 40. However, a further optional step, step 38, may be implemented where the new maximum power reduction MPR_{new} is notified. To where and from where this signal is transmitted depends on how the steps of method 20 are implemented. If steps 34 and/or 36 are implemented by the UE, then step 38 may be implemented such that the UE reports the new maximum power reduction under which it is operating to the base station of the telecommunication network to which the UE is currently connected. Alternatively, if the base station of the telecommunication network implements steps 34 and/or 36, the base station must implement step 38 to sending a notification of the new maximum power reduction MPR_{new} to the UE so that the UE can begin transmitting signals using the new maximum power reduction.

Steps 24 to 38 may all be performed by the UE or the base station or steps 24 to 38 may be split between the UE and base station, with notifications sent between the UE and base station as necessary. For example, the over-the-air total radiated power may be measured at step 24 by the UE. The UE may then determine the difference Δ at step 26 before sending the difference Δ to the base station so that the base station may revise the maximum power reduction MPR_{new} at step 16. Alternatively, the base station may perform steps 22 to 36 before sending the notification of the new maximum power reduction MPR_{new} to the UE at step 40.

Method 10 may be performed repeatedly or just once. For example, the over-the-air total power reduction may be characterised once for a UE device and that value used at all subsequent times. Alternatively, the over-the-total air radiated power may be re-measured or re-estimated, in which case the maximum power reduction may also be further revised. Similarly, steps 26 to 38 may be repeated if a new maximum power reduction is mandated for all UEs.

As introduced above, step 24 in which the over-the-air radiated power and actual transmitted power are measured/estimated may be performed on the UE side or on the base station side. Figures 2 and 3 illustrate methods in which step 24 is implemented on the UE side, while Figures 4 and 5 illustrate methods in step 24 is implemented on the base station side.

Each UE device communicates with the network via an antenna that radiates signals as provided by a power amplifier. Conducted power is the RF power that is supplied by the power amplifier to power the antenna and may be measured at the output of the power amplifier. The conducted power will differ from the output power of the antenna due to losses. The output power of the antenna may be characterised in different ways, one of which is the over-the-air total radiated power.

Conventionally, UEs report the conducted power value to the network, for example to the base station to which the UE is connected. This conducted power value is related to the over-the-air total radiated power of the UE but does not fully reflect the actual total radiated power. For example, the greater the conducted power, the greater the actual over-the-air radiated power. This is because the reported conducted power value is typically measured before degradations due to, for example, antenna losses, combiner losses and RF component variations occur, meaning that the actual total radiated power at the antenna port can be several decibels lower than the conducted power value reported by the UE. This shortfall means that the UE is operating well below the reduced uplink power limit, and the maximum power reduction being applied is unnecessarily large. Better determination of the actual over-the-air total radiated power rather than the conducted power will allow better dynamic management of the maximum power reduction.

As noted above, the over-the-air total radiated power may be defined as the total power radiated by a UE antenna in all directions, considering all angular radiation patterns. The total radiated power accounts for antenna gain, efficiency and losses, and provides a more complete picture of how much power is actually transmitted into space. In addition to the total radiated power, other measures of the over-the-air radiated power may be used, such as the minimum or maximum Effective Isotropic Radiated Power (EIRP) values (because the radiation pattern is not uniform, there will be a position or direction with a minimum amount of EIRP and a position or direction with a maximum EIRP).

It may also be measured, for example by software running on the UE or from laboratory testing.

Figure 2 illustrates an example message flow that may be used in an implementation of the Figure 1 in which step 24 is performed on the UE side 110 and steps 26 to 38 are performed on the base station side 120. This example will refer to total radiated power although any measure of the over-the-air radiated power may be used. UE 110 transmits signals to a telecommunications network such as a cellular network. The UE may transmit signals to a network node 120 of the network (for example, where the network is a cellular network, to a base station 120 such as a 3G, 4G, 5G or 6G base station, or beyond). For instance, the base station 120 may be a NodeB, eNodeB or gNodeB.).

The over-the-air total radiated power of the UE antenna is identified by the UE 110, such as by determining the total radiated power based on a measurement. For example, when determining an over-the-air total radiated power, a UE device vendor or manufacturer may perform tests for a UE 110 and/or an antenna (for instance, prior to putting the UE device on the market). The tests may involve conductive and/or over-the-air testing. The over-the-air testing may comprise transmitting signals at maximum power and measuring the resulting power levels at locations around the antenna. Such tests may already be performed in order to achieve certification of a minimum total radiated power for a frequency band or range of frequencies, so this testing can be leveraged to provide reporting to the network once the UE 110 is deployed in the network (although it currently is used only to achieve certification). Hence, data regarding corresponding over-the-air total radiated powers of different UEs and/or antennas may be collected through such testing.

The results of testing may be stored by the UE 110 (or, as described in more detail below, the results may be stored on the network side such as at base stations 120). For example, the over-the-air total radiated power value may be stored or a value reflecting this may be stored, such as the difference between the measured over-the-air total radiated power and he reference maximum uplink power.

Other factors may be included in the over-the-air total radiated power measured. For instance, the over-the-air total radiated power may be identified based on the type of antenna of the UE 110. For example, the over-the-air testing may be performed for different types of antennas, and the UE 110 (or base station 120) may store a value according to the type of antenna comprised within the UE 110. In another example, the over-the-air testing may be performed for different types of UE 110 (such as model type), and the UE 110 (or base station 120) may store a value according to the type of UE 110. Similarly, individual RF components may be tested, or tests for the same type of UE 110 but having different RF components may be performed, and the UE 110 (or base station 120) may store a value based on the RF components of which it is comprised.

In other examples, the UE 110 may measure the over-the-air total radiated power itself. For example, some UEs 110 may include a built-in power sensor that is configured to measure a power level such as an output RF power level. In yet other examples, the UE 110 may monitor impedance matching of the UE 110 to determine the over-the-air total radiated power. That is, while the over-the-air radiated power may not be directly measured at or before the antenna terminals through electrical measurements, losses due to an impedance mismatch may be used to determine the power loss of the antenna and hence the resulting over-the-air total radiated power. The monitoring may be performed by monitoring or measuring a standing wave ratio (SWR). For example, if an SWR meter measures an incident power of 100W and 50W of reflected power, this may indicate that 50W of power have been absorbed by the antenna and/or lost due to transmission line losses. The SWR measured or monitored may more specifically be a voltage standing wave ratio.

In still further examples, the UE 110 may have previously reported a power parameter to the network (which may have been an input or output power parameter). For example, the UE 110 may have reported a physical uplink shared channel (PUSCH) or physical uplink control channel (PUCCH) transmitter power. The network may provide feedback on the over-the-air total radiated power - for example, through an uplink signal-to-interference-plus-noise ratio (UL-SINR). The UE 110 can then determine the over-the-air total radiated power based on this feedback. For example, if the power received at the network 120 is significantly lower than would be expected based on the previously reported power parameter, the UE 110 may adjust its estimation of the over-the-air total radiated power such that the maximum power reduction is revised accordingly. In other examples, the UE 110 may determine that the stored over-the-air total radiated power inaccurately reflects the actual uplink power achieved and instead switch to measuring or determining the over-the-air total radiated power based on the feedback.

If the UE measures the over-the-air total radiated power and the base station performs steps 26 to 38 of Figure 1, the UE 110 sends a communication 101 to the base station 120 that indicates the measured over-the-air total radiated power. The communication may specifically flag the over-the-air total radiated power, such as by marking it as distinct from an input power parameter. For example, the communication may label such parameters as "UL" - for example, P_UL_TRP for an uplink total radiated power parameter or PH_UL for a power headroom derived from the over-the-air total radiated power. Other terminology may be used.

After sending the communication 101 indicating the total radiated power to the network 120, the network 120 can then implement steps 26 to 38 of Figure 1, thereby providing dynamic adjustment of the maximum power reduction of the UE 110. UE 110 receives a communication 102, from the base station 120, that includes an indication of the revised maximum power reduction MPR_{new} in accordance with step 38 of Figure 1.

The above focusses on the UE 110 determining the over-the-air radiated power of the UE 110. However, the over-the-air radiated power may be determined on the base station 120 side. In this case, the base station 120 obtains the over-the-air total radiated power of the UE 110 (or other measure of the over-the-air radiated power). As described before, a network operator, network vendor or a third-party testing facility may perform tests for a UE device 110 and/or an antenna to determine the over-the-air total radiated power (for instance, prior to putting the UE device 110 on the market). Where testing is performed at the network side (by a network operator, vendor or third party), an interface may be provided between the tester and the network to provide the results to the base station 120. In some cases, the results may be stored by a server or database that is comprised within, or in communication with, the base station 120. The base station 120 or server may store a plurality of over-the-air total radiated power levels. For example, the base station 120 or server may store the total radiated power values per available UE vendor and/or type of UE device/antenna and/or frequency band, and so on.

The base station 120 may also perform any of the steps described above with reference to the UE 110. This may of course require messaging between the UE 110 and base station 120 where information must be shared.

A person skilled in the art will appreciate that the above embodiments may be varied in many different respects without departing from the scope of the present invention that is defined by the appended claims.

## Claims

1. A method of operating user equipment in a telecommunications network in which the user equipment operates in accordance with a reference maximum power and an assigned maximum power reduction to limit the transmit power to a reduced power limit less than the maximum power, the method comprising:
(i) obtaining the over-the-air total radiated power of the user equipment when operating to meet the reference maximum power;
(ii) determining a shortfall corresponding to how much the over-the-air total radiated power is less than the reference maximum power; and
(iii) setting a new maximum power reduction by decreasing the assigned maximum power reduction by an amount less than or equal to the shortfall.

2. The method of claim 1, further comprising operating the user equipment to communicate with the telecommunications network according to the revised maximum power reduction.

3. The method of claim 1 or 2, wherein step (i) comprises testing the user equipment, or another user equipment of the same type, by operating the user equipment and measuring the over-the-air total radiated power and, optionally, wherein the measured over-the-air total radiated power is stored in a computer memory of the user equipment or the base station.

4. The method of claim 1 or 2, wherein step (i) comprises obtaining the over-the-air total radiated power by measuring a power parameter during normal use of the user equipment.

5. The method of claim 4, wherein step (i) comprises measuring the over-the-air total radiated power directly, optionally using a power sensor of the user equipment.

6. The method of claim 4 wherein step (i) comprises calculating the total radiated power from the measured power parameter.

7. The method of claim 6, wherein measuring the power parameter comprises measuring impedance matching of an antenna of the user equipment and the method comprises converting the impedance matching to an equivalent over-the-air total radiated power and, optionally, measuring the impedance matching of the antenna by measuring a standing wave ratio.

8. The method of any preceding claim, wherein the user equipment performs step (ii) and the method further comprises the user equipment transmitting a notification to the telecommunications network to report the total radiated power.

9. The method of any preceding claim, wherein the telecommunications network performs step (iii) and the method further comprises the telecommunications network transmitting a notification to the user equipment to report the new maximum power reduction.

10. The method of any of claims 1 to 7, wherein the user equipment performs steps (i) to (iii) and the method further comprises the user equipment transmitting a notification to the telecommunications network to report the new maximum power reduction.

11. The method of any preceding claim, comprising repeatedly performing steps (i) to (iii).

12. One or more computer programs comprising instructions that, when executed by one or more computer processors, cause the one or more computer processors to implement the method of any previous claim.

13. One or more computer-readable media having stored therein the one or more computer programs of claim 12.

14. User equipment configured to operate in a telecommunications network, the user equipment comprising one or more computer processors and computer memory having stored therein the one or more computer programs according to claim 12.

15. A telecommunications network comprising a base station and user equipment connected to the base station, wherein the telecommunications network comprises one or more computer processors and one or more computer memories having stored therein the one or more computer programs according to claim 12.
